# EUROPEAN PATENT APPLICATION

(11) **EP 2 527 160 A1**
(43) Date of publication of application: **28.11.2012**
(21) Application number: 11734488.7
(22) Date of filing: 18.01.2011
(51) Int. Cl.: B60B 21/02, B60B 21/00

(54) **WHEEL MADE OF LIGHTWEIGHT ALLOY**

(30) Priority: 21.01.2010 JP 2010011442
(71) Applicant: Washi Kosan Co., Ltd., Tokyo 108-0074 (JP)
(72) Inventor: ONO, Kotaro, Fukui-shi Fukui 910-0024 (JP)
(74) Representative: Goddar, Heinz J.
(86) International application number: PCT/JP2011/000226
(87) International publication number: WO 2011/089881

(57) **Abstract**

A light alloy wheel having excellent longitudinal and lateral rigidities is provided.

The present invention is a light alloy wheel 10 for a vehicle provided with a disk portion 6 and an inner rim portion 8 erected along a circumferential edge of the disk portion 6, wherein the inner rim portion 8 includes a well portion 11 erected vertically along the circumferential edge of the disk portion 6, a rim middle portion 12 continuous with the well portion 11, and an inner rim flange portion 13 connected to a junction portion 15 at a distal end of the rim middle portion 12, the inner rim flange portion 13 includes an outer circumferential flange 13a extending outward from the junction portion 15, and an inner circumferential flange 13b extending inward from the junction portion 15, and a circumferential edge of the outer circumferential flange 13a is bent in an axial direction of the light alloy wheel.

## Description

### Technical Field

The present invention relates to a light weight wheel whose rigidity is improved by reinforcing a rim.

### Background Art

Generally, a vehicle running on a road wears tyres, and is equipped with metal wheels supporting the tyres.
In recent years, such a wheel has been desired to be as light as possible and to have an excellent design. In addition, particularly in passenger automobiles, the size of a wheel is on the increase in order to reduce vibrations and to improve steering performance during running.

The increase in wheel size, however, has the disadvantage of easily deflecting a substantially-cylindrical inner rim.
Regarding this, methods of reinforcing an inner rim flange of the inner rim have been discussed.
For example, an automotive wheel made of a composite material, where a rim has a bead holding flange, and the bead holding flange is provided with a U-shaped cavity extending along the entire circumference of the rim, is known (for example, see a patent document 1).
In addition, a wheel rim, where a rim flange is formed in a large annular shape having a larger diameter and folded so as to form a double-layered rim flange, is known (for example, see a patent document 2).
Further, a wheel for a vehicle, where an inner diametrical portion of one of annular rim flanges on both sides of a rim portion is formed so as to project from the inner circumferential face of a bead sheet portion in a diametrically central direction of the rim portion, is known (for example, see a patent document 3).

### Citation List

### Patent Literature

PLT 1: Japanese Patent Application Laid-Open No. H10-6705
PLT 2: Japanese Patent Application Laid-Open No. 2003-236638
PLT 3: Japanese Patent Application Laid-Open No. 2008-137562

### Summary of the Invention

### Technical Problem

However, the automotive wheel described in the patent document 1 has a U-shaped arm, and therefore, though an improvement in lateral rigidity is confirmed, the longitudinal rigidity is insufficient. In addition, an automotive wheel having a W-shaped arm is also disclosed, but a portion more interior than a portion connected with a bead seat portion is excessively large so that the portion might collide with a suspension, and moreover the automotive wheel is made of a synthetic resin composite material, which is impractical.
Regarding the wheel rim described in the patent document 2, since the folding does not achieve integration, it cannot be said that the rigidity of the rim is sufficiently improved.
The vehicle wheel described in the patent document 3 is excellent in longitudinal rigidity, but it cannot be said that the vehicle wheel is sufficient in lateral rigidity.

An object of the present invention is to provide a light alloy wheel having excellent longitudinal and lateral rigidities.

### Solution to Problems

When conducting intensive research to solve the above problems, the present inventor has found that the above problems can be solved by changing the shape of an inner rim of a light alloy wheel complying with the standards of Japan Automobile Tyre Manufacturers Association (JATMA) and the standards of the European Tyre and Rim Technical Organization (ETRTO), and has completed the present invention.

That is, a first aspect of the present invention lies in (1) a light alloy wheel for a vehicle provided with a disk portion and an inner rim portion erected along a circumferential edge of the disk portion, wherein the inner rim portion includes a well portion erected vertically along the circumferential edge of the disk portion, a rim middle portion continuous with the well portion, and an inner rim flange portion connected to a junction portion at a distal end of the rim middle portion, the inner rim flange portion includes an outer circumferential flange extending outward from the junction portion, and an inner circumferential flange extending inward from the junction portion, and a circumferential edge of the outer circumferential flange is bent in an axial direction of the light alloy wheel.

A second aspect of the present invention lies in (2) the light alloy wheel according to the first aspect, wherein the average thickness of the inner circumferential flange is thicker than the average thickness of the outer circumferential flange, and the radial length of the inner circumferential flange is shorter than the radial length of the outer circumferential flange.

A third aspect of the present invention lies in (3) the light alloy wheel according to the first or second aspect, wherein the inner circumferential flange is so provided as to be perpendicular to an axis of the light alloy wheel.

A fourth aspect of the present invention lies in (4) the light alloy wheel according to the third aspect, including an inner circumferential flange bending portion formed by further bending a circumferential edge of the inner circumferential flange in the axial direction.

A fifth aspect of the present invention lies in (5) the light alloy wheel according to the fourth aspect, wherein a flange rib is so provided as to extend between an outer circumferential flange bending portion formed by bending a circumferential edge of the outer circumferential flange in the axial direction and the inner circumferential flange bending portion formed by further bending a circumferential edge of the inner circumferential flange in the axial direction.

A sixth aspect of the present invention lies in (6) the light alloy wheel according to any one of the first to fifth aspects, wherein the thickness of the well portion is 2.0 mm or less.

A seventh aspect of the present invention lies in (7) the light alloy wheel according to any one of the first to sixth aspects, wherein the rim middle portion comprises an inclined connection portion, a protrusion-like hump portion provided on the connection portion, and a bead seat portion continuous with the hump portion.

An eighth aspect of the present invention lies in (8) the light alloy wheel according to any one of the first to sixth aspects, wherein the well portion is provided with a geometric-pattern-like well rib.

A ninth aspect of the present invention lies in (9) the light alloy wheel according to the eighth aspect, wherein the side of the disk portion and the side of the inner rim flange portion are different in imparted density of the well rib from each other.

A tenth aspect of the present invention lies in (10) the light alloy wheel according to the eighth aspect, wherein the side of the disk portion and the side of the inner rim flange portion are different in heights of the well rib from each other.

An eleventh aspect of the present invention lies in (11) the light alloy wheel according to any one of the first to tenth aspects, wherein the side of the disk portion and the side of the inner rim flange portion are different in thicknesses of the well portion from each other.

### Advantageous Effects of the Invention

According to the light alloy wheel of the present invention, since the inner circumferential flange is provided in addition to the outer circumferential flange, the longitudinal rigidity is improved, and furthermore, since a circumferential edge of the outer circumferential flange is bent in the axial direction of the light alloy wheel, the lateral rigidity is improved.
Therefore, the light alloy wheel has excellent longitudinal and lateral rigidities.

Here, generally, the thickness and the length of the outer circumferential flange are determined according to the size of a vehicle to which the light alloy wheels are attached.
According to the light alloy wheel of the present invention, since the length of the inner circumferential flange is made shorter than the length of the outer circumferential flange, the light alloy wheel can be reliably prevented from hitting a suspension, and in addition, since the average thickness of the inner circumferential flange is made thicker than the average thickness of the outer circumferential flange, the strength of the inner circumferential flange can be improved, and therefore the rigidity of the whole light alloy wheel itself can also be improved.

According to the light alloy wheel of the present invention, in the case where the inner circumferential flange is so provided as to be perpendicular to the axis of the light alloy wheel, the longitudinal rigidity is reliably improved.

According to the light alloy wheel of the present invention, in the case where the circumferential edge of the inner circumferential flange is further axially bent, the lateral rigidity is further improved.

According to the light alloy wheel of the present invention, in the case where a flange rib is so provided as to extend between an outer circumferential flange bending portion and an inner circumferential flange bending portion, the longitudinal rigidity is further improved.
In addition, it is possible to utilize such a flange rib to add a geometric pattern or the like.

Since the light alloy wheel of the present invention has excellent longitudinal and lateral rigidities, the thickness of the well portion can be set to 2.0 mm or less. This makes it possible to reduce the weight of the light alloy wheel.

According to the light alloy wheel of the present invention, in the case where the well portion is provided with well ribs, the strength of the well portion can be improved and a strain due to a difference between a torque on the side of the disk portion and a torque on the side of the inner rim flange can be suppressed. In addition, it is possible to utilize such well ribs to add a geometric pattern or the like.

### Brief Description of the Drawings

FIG. 1 is a sectional view showing a light alloy wheel according to a first embodiment;
FIG. 2A is an enlarged sectional view showing a portion P in FIG. 1, and FIG. 2B is a perspective view showing the light alloy wheel according to the first embodiment;
FIG. 3A is an enlarged sectional view showing an inner rim portion of a light alloy wheel according to a second embodiment, and FIG. 3B is a perspective view showing the light alloy wheel according to the second embodiment;
FIG. 4A is an enlarged sectional view showing an inner rim portion of a light alloy wheel according to a third embodiment, and FIG. 4B is a perspective view showing the light alloy wheel according to the third embodiment;
FIG. 5A is a plan view showing a well rib provided to a well portion in the light alloy wheel according to the third embodiment, FIG. 5B is a sectional view taken along line X1-X1 in FIG. 5A, and FIG. 5C is a sectional view taken along line X2-X2 in FIG. 5A;
FIG. 6A is an enlarged sectional view showing an inner rim portion of a light alloy wheel according to a fourth embodiment, and FIG. 6B is a perspective view showing the light alloy wheel according to the fourth embodiment;
FIG. 7A is an enlarged sectional view showing an inner rim portion of a light alloy wheel according to a fifth embodiment, and FIG. 7B is a perspective view showing the light alloy wheel according the fifth embodiment;
FIG. 8A is an enlarged sectional view showing an inner rim portion of a light alloy wheel according to a sixth embodiment, and FIG. 8B is a perspective view showing the light alloy wheel according to the sixth embodiment;
FIG. 9A is a plan view showing a well rib provided to a well portion in the light alloy wheel according to the sixth embodiment, FIG. 9B is a sectional view taken along line Y1-Y1 in FIG. 9A, and FIG. 9C is a sectional view taken along line Y2-Y2 in FIG. 9A.
FIG. 10A is an enlarged sectional view showing an inner rim portion of a light alloy wheel according to a seventh embodiment, and FIG. 10B is a perspective view showing the light alloy wheel according to the seventh embodiment;
FIG. 11 is a plan view showing a well rib provided on a well portion in the light alloy wheel according to the seventh embodiment;
FIG. 12 is an enlarged sectional view of a well portion of a light alloy wheel according to another embodiment;
FIG. 13 is a schematic view showing the outline of a longitudinal rigidity test on examples;
FIG. 14 is a schematic view showing the outline of a lateral rigidity test on examples;
FIG. 15A is a side view showing the outline of a tyre bead deflection test on the examples, and FIG. 15B is a sectional view thereof.
FIG. 16 shows respective dimensions of inner rim flange portions of light alloy wheels of examples 1, 2, and a comparative example 1 when the second moment of area is measured in disregard of force of the wheel;
FIG. 17 shows a simulation of stress acting on an inner rim flange portion of a light alloy wheel when a tyre is attached to the wheel and a predetermined air pressure is applied thereto;
FIG. 18 shows respective dimensions of inner rim flange portions of light alloy wheels of examples 1, 2, and a comparative example 1 when the second moment of area is measured in consideration of force of the wheel; and
FIG. 19A is an enlarged sectional view showing an inner rim portion of a light alloy wheel which does not have an inner circumferential flange, and FIG. 19B is a perspective view showing the light alloy wheel shown in FIG. 19A.

### Description of Embodiments

Hereinafter, with reference to the figures, if necessary, preferred embodiments of the present invention will be described in detail. It should be noted that in the figures identical elements are denoted by identical reference numerals in order to eliminate repeated description. In addition, positional relations, such as above and below or right and left, are based on positional relationships shown in the figures, unless otherwise noted. Furthermore, the dimensional ratios of the figures are not limited to the ratios shown graphically.

### (First Embodiment)

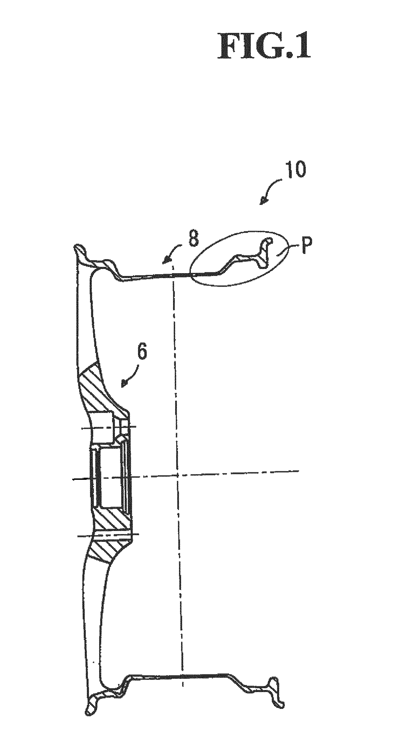

FIG. 1 is a sectional view showing a light alloy wheel according to a first embodiment.
As shown in FIG. 1, a light alloy wheel 10 according to the first embodiment is provided with a disk portion 6, an inner rim portion 8 elected along a circumferential edge of the disk portion 6, and an outer rim portion erected along a circumferential edge of the disk portion 6.

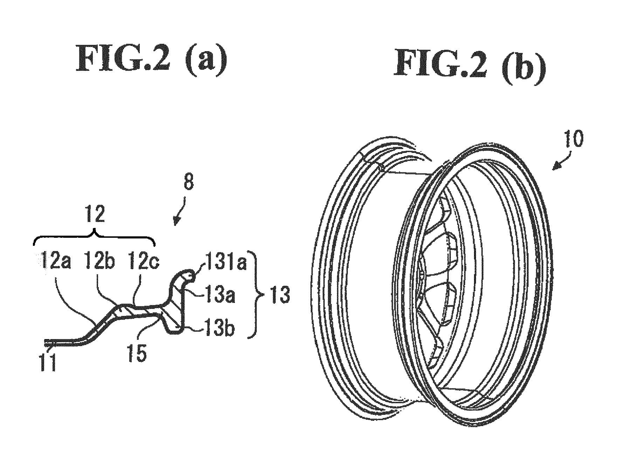

FIG. 2A is an enlarged sectional view showing a portion P in FIG. 1, and FIG. 2B is a perspective view showing the light alloy wheel according to the first embodiment.
As shown in FIGS. 2A and 2B, in the light alloy wheel 10 according to the first embodiment, the inner rim portion 8 is provided with a well portion 11 vertically erected along the circumferential edge of the disk portion 6, a rim middle portion 12 continuous with the well portion 11, and an inner rim flange portion 13 connected with a junction portion 15 at a distal end of the rim middle portion 12.

The rim middle portion 12 is composed of an inclined connection portion 12a, a protruded hump portion 12b provided on the connecting portion 12a, and a bead seat portion 12c continuous with the hump portion 12b.
In addition, the inner rim flange portion 13 has an outer circumferential flange 13a extending outward from the junction portion 15 (that is, in a radial direction so as to separate from an axial center), an outer circumferential flange bending portion 131a formed by axially bending the circumferential edge of the outer circumferential flange 13a, and an inner circumferential flange 13b extending inward from the junction portion 15 (that is, in a radial direction toward the axial center).

In the light alloy wheel 10 according to the first embodiment, since the inner circumferential flange 13b is provided in addition to the outer circumferential flange 13a, the longitudinal rigidity of the inner rim portion 8 can be improved.
In addition, since the outer circumferential flange bending portion 131a is provided, the lateral rigidity of the inner rim portion 8 can be improved.

In the light alloy wheel 10, it is preferred that the thickness of the well portion 11 is 2.0 mm or less. This makes it possible to achieve reduction of the weight of the light alloy wheel 10. It should be noted that since the light alloy wheel 10 according to the first embodiment has excellent rigidity, as described above, the rigidity can be sufficiently secured even if the thickness of the well portion 11 is reduced.
Therefore, if the weight of an ordinary light alloy wheel which does not have the flange 13b and the outer circumferential flange bending portion 131a is relatively represented by 100, the weight of the light alloy wheel according to the first embodiment that has the same size as the ordinary light alloy wheel 10 can be made equal to or less than 100.

In addition, it is preferred that when the load displacement of an ordinary light alloy wheel which does not have the flange 13b and the outer circumferential flange bending portion 131a is set at 100%, the ratio of the longitudinal rigidity of the light alloy wheel 10, the ratio of the lateral rigidity thereof, and the ratio of the rigidity thereof against triaxial loads show 109% to 138%. It should be note that a method of applying triaxial loads is called tyre bead deflection test, the details of which will be described in Examples.

The inner circumferential flange 13b is integral with the outer circumferential flange 13a, and is so provided as to be perpendicular to the axis of the light alloy wheel 10. This ensures the improvement in longitudinal rigidity.

Here, in the light alloy wheel 10, the rim middle portion 12 and the outer circumferential flange 13a extending outward and connected to the junction portion 15 at the distal end of the rim middle portion 12 have ordinary sizes complying with the standards of Japan Automobile Tyre Manufacturers Association and the standards of the European Tyre and Rim Technical Organization. That is, the thickness and length of the outer circumferential flange 13a are based on acceptance criteria.

On the other hand, the thickness and length of the inner circumferential flange 13b can be freely set, but, since a vehicle suspension is positioned in a longitudinal direction of the inner circumferential flange 13b, as the length increases, the possibility becomes higher that the inner circumferential flange 13b might hit and damage the suspension.

In the light alloy wheel 10, the average thickness of the inner circumferential flange 13b is made thicker than the average thickness of the outer circumferential flange 13a, and the length of the inner circumferential flange 13b is made shorter than the length of the outer circumferential flange 13a.
Since the length of the inner circumferential flange 13b is made shorter than the length of the outer circumferential flange 13a, it is ensured that the inner circumferential flange 13b is prevented from hitting the suspension, and since the average thickness of the inner circumferential flange 13b is made thicker than the average thickness of the outer circumferential flange 13a, the strength of the inner circumferential flange 13b can be improved, and the whole rigidity of the light alloy wheel can also be improved.
In addition, adoption of such settings ensures that the above-described effects can be provided even if the light alloy wheel has a different size.

The light alloy wheel 10 may be manufactured by forging and shaping a cast billet, or may be manufactured by forging and shaping a cylindrical forged billet obtained by forging a cast billet.
In particular, when the light alloy wheel 10 is manufactured by forging and shaping the forged billet, metal crystal particles become fine, and therefore the strength of the light alloy wheel itself can be further increased.

In addition, the inner rim portion 8 can be formed by a known method, for example, may be formed by spinning. In this case, also, metal crystal particles can be made fine by using a forged billet as a starting material, so that the strength of the inner rim portion 8 can be further increased.

### (Second Embodiment)

A light alloy wheel according to a second embodiment is the same as the light alloy wheel 10 according to the first embodiment, except that the shapes of both the inner rim flange portions are different from each other.

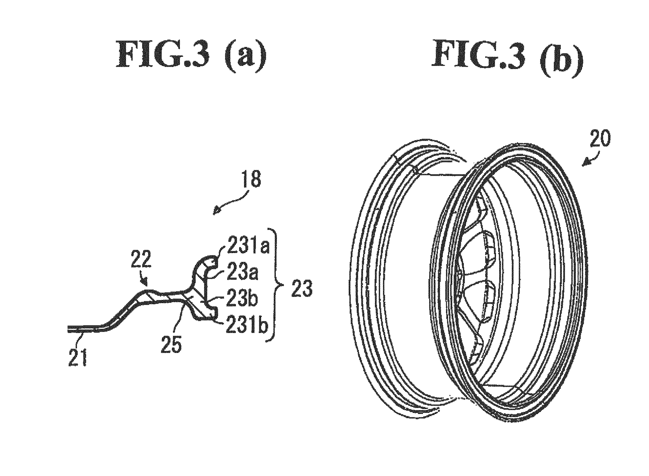

FIG. 3A is an enlarged sectional view showing the inner rim portion of the light alloy wheel according to the second embodiment, and FIG. 3B is a perspective view showing the light alloy wheel according to the second embodiment.
As shown in FIGS. 3A and 3B, in a light alloy wheel 20 according to the second embodiment, an inner rim portion 18 is provided with a well portion 21 vertically erected along a circumferential edge of a disk portion, a rim middle portion 22 continuous with the well portion 21, and an inner rim flange portion 23 connected with a junction portion 25 at a distal end of the rim middle portion 22.

The inner rim flange portion 23 has an outer circumferential flange 23a extending outward from the junction portion 25, an outer circumferential flange bending portion 231a formed by axially bending a circumferential edge of the outer circumferential flange 23a, an inner circumferential flange 23b extending inward from the junction portion 25, and an inner circumferential flange bending portion 231b formed by further axially bending a circumferential edge of the inner circumferential flange 23b.

In the light alloy wheel 20 according to the second embodiment, since the inner circumferential flange 23b is provided in addition to the outer circumferential flange 23a, the longitudinal rigidity of the inner rim portion 18 can be improved.
In addition, since the outer circumferential flange bending portion 231a and the inner circumferential flange bending portion 231b are provided, the lateral rigidity of the inner rim portion 18 can be further improved. It should be noted that it is preferred that the outer circumferential flange bending portion 231a and the inner circumferential flange bending portion 231b have the same height.

### (Third Embodiment)

A light alloy wheel according to a third embodiment has a structure where the light alloy wheel 10 according to the first embodiment is provided with well ribs.

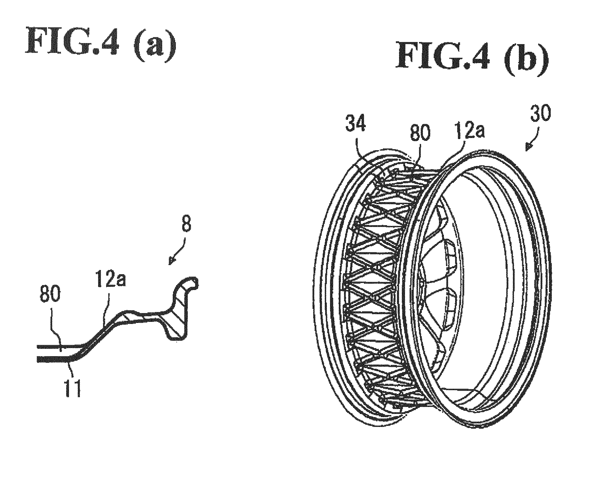

FIG. 4A is an enlarged sectional view showing an inner rim portion of the light alloy wheel according to the third embodiment, and FIG. 4B is a perspective view showing the light alloy wheel according to the third embodiment.
As shown in FIGS. 4A and 4B, in the right allot wheel 30 according to the third embodiment, the inner rim portion 8 has the well portion 11 provided with well ribs 80.
The well rib 80 is connected to the connection portion 12a and an outer rim portion 34.

In the light alloy wheel 30 according to the third embodiment, since the well ribs 80 are provided, the longitudinal rigidity of the well portion 11 is further improved, and a strain due to a difference between a torque on the disk portion side in the axial direction and a torque on the inner rim flange side in the same direction can be suppressed.
In addition, the well ribs 80 are formed in a geometric-pattern-like shape.

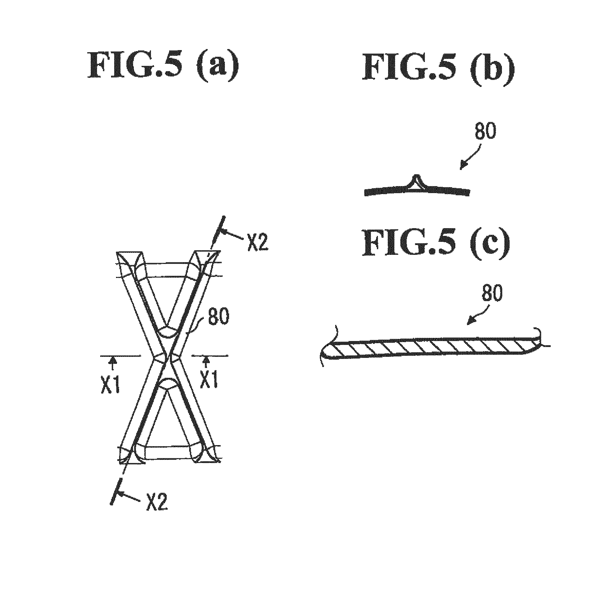

FIG. 5A is a plan view showing the well rib provided to the well portion, FIG. 5B is a sectional view taken along line X1-X1 in FIG. 5A, and FIG. 5C is a sectional view taken along line X2-X2 in FIG. 5A.
As shown in FIGS. 5A and 5B, a constituent unit of the well rib 80 has an X-shaped structure as viewed from the above, and an inverted V-shaped structure in cross section.
As shown in FIG. 5B, the well rib 80 has a constant height from the disk side to the inner rim flange portion side. This suppresses deflection of the inner rim flange portion.

### (Fourth Embodiment)

A light alloy wheel according to a fourth embodiment has such a structure that the light alloy wheel 20 according to the second embodiment is provided with flange ribs.

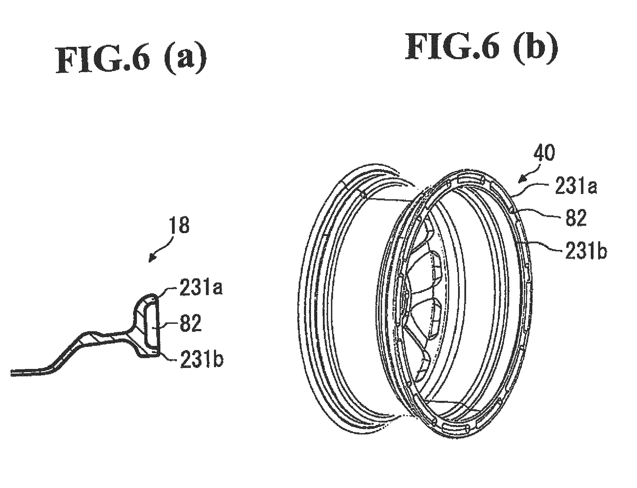

FIG. 6A is an enlarged sectional view showing an inner rim portion of the light alloy wheel according to the fourth embodiment, and FIG. 6B is a perspective view showing the light alloy wheel according to the fourth embodiment.
As shown in FIGS. 6A and 6B, in the light alloy wheel 40 according to the fourth embodiment, the inner rim portion 18 is provided with a plurality of flange ribs 82 disposed between the outer circumferential flange bending portion 231a and the inner circumferential flange bending portion 231b at intervals in a circumferential direction. That is, the flange ribs 82 are connected to the outer circumferential flange bending portion 231a and the inner circumferential flange bending portion 231b.

In the light alloy wheel 40 according to the fourth embodiment, since the flange ribs 82 are provided, the longitudinal rigidity of the inner rim flange portion is further improved.
In addition, a geometrical pattern can be added to the flange rib 82. Furthermore, by utilizing the flange ribs 82, the light alloy wheel according to the fourth embodiment can be reduced in weight as compared with a light alloy wheel according to a fifth embodiment described below.

### (Fifth Embodiment)

The light alloy wheel according to the fifth embodiment is identical with the light alloy wheel 30 according to the third embodiment, except that the shapes of both the inner rim flange portions are different from each other.

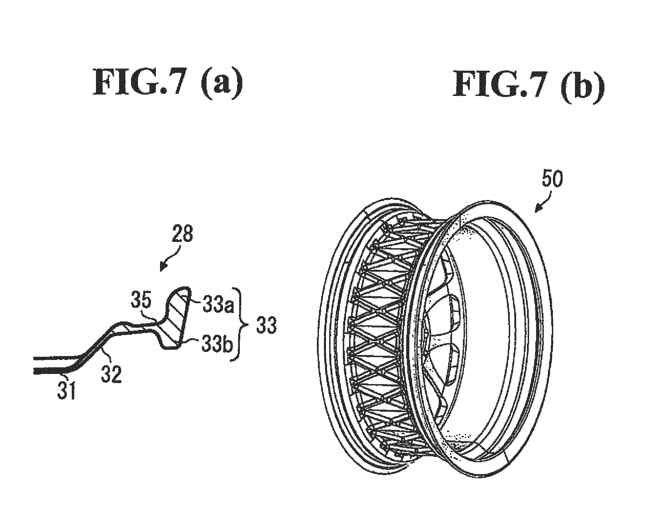

Fig. 7A is an enlarged sectional view showing the inner rim portion of the light alloy wheel according to the embodiment, and FIG. 7B is a perspective view showing the light alloy wheel according to the fifth embodiment.
As shown in FIGS. 7A and 7B, in a light alloy wheel 50 according to the fifth embodiment, an inner rim portion 28 is provided with a well portion 31 vertically erected along a circumferential edge of the disk portion, a rim middle portion 32 continuous with the well portion 31, and an inner rim flange portion 33 connected with a junction portion 35 at a distal end of the rim middle portion 32.

The inner rim flange 33 has an outer circumferential flange 33a extending outward from the junction portion 35, and an inner circumferential flange 33b extending inward from the junction portion 35.
End faces of the outer circumferential flange 33a and the inner circumferential flange 33b are flush with each other, and are tapered.

In the light alloy wheel 50 according to the fifth embodiment, since the end face is tapered, longitudinal and lateral rigidities can be improved.

### (Sixth Embodiment)

A light alloy wheel according to a sixth embodiment has a well rib different in shape from the well rib provided on the light alloy wheel 30 according to the third embodiment.

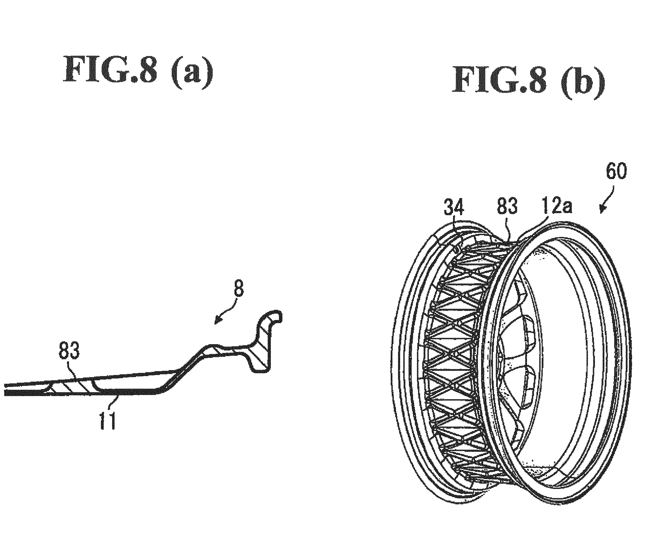

FIG. 8A is an enlarged sectional view showing an inner rim portion of the light alloy wheel according to the sixth embodiment, and FIG. 8B is a perspective view showing the light alloy wheel according to the sixth embodiment.
As shown in FIGS. 8A and 8B, in a light alloy wheel 60 according to the sixth embodiment, the inner rim portion 8 has the well portion 11 provided with well rims 83.
The well ribs 83 are connected to the connection portion 12a and the outer rim portion 34.

In the light alloy wheel 6 according to the sixth embodiment, since the well ribs 83 are provided, the longitudinal rigidity of the well portion 11 is further improved, and a strain due to a different between a torque on the disk portion side in the axial direction and a torque on the inner rim flange side in the same direction can be suppressed.
In addition, the well ribs 85 are formed in a geometric-pattern-like shape.

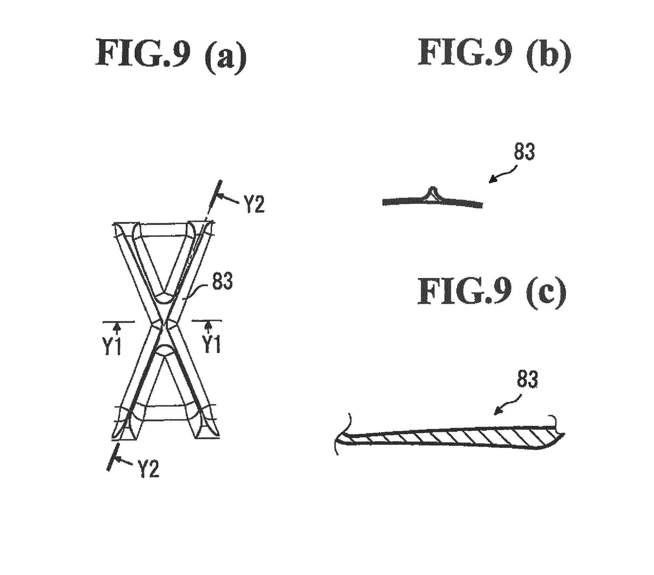

FIG. 9A is a plan view showing the well rib provided on the well portion in the light alloy wheel according to the sixth embodiment, FIG. 9B is a sectional view taken along line Y1-Y1 in FIG. 9A, and FIG. 9C is a sectional view taken along line Y2-Y2 in FIG.9A.
AS shown in FIGS. 9A and 9B, a constituent unit of the well rib 83 has an X-shaped structure as viewed from the above, and an inverted V-shaped structure in cross section.
As shown in FIG. 9B, the well rib 83 becomes gradually higher from the disk portion side toward the inner rim flange portion side. This further reinforces the inner rim flange portion side so that deflection is suppressed more reliably.

### (Seventh Embodiment)

A light alloy wheel according to a seventh embodiment has a well rib different in shape from the well rib provided on the light alloy wheel 30 according to the third embodiment.

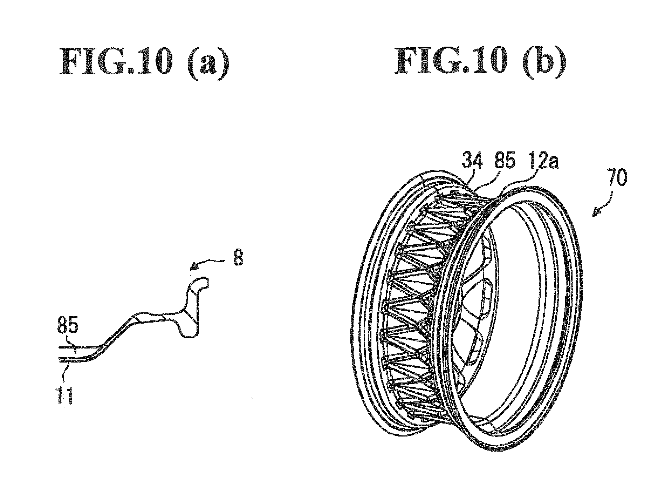

FIG. 10A is an enlarged sectional view showing an inner rim portion of the light alloy wheel according to the seventh embodiment, and FIG. 8B is a perspective view showing the light alloy wheel according to the seventh embodiment.
As shown in FIGS. 10A and 10B, in a light alloy wheel 70 according to the seventh embodiment, the inner rim portion 8 has the well portion 11 provided with well rims 85.
The well ribs 85 are connected to the connection portion 12a and the outer rim portion 34.

The light alloy wheel 70 according to the seventh embodiment is provide with the well ribs 85. The well ribs 85 have different imparted densities on the side of the disk portion in an axial direction and on the side of the inner rim flange portion in the same direction. That is, the imparted density on the side of the inner rim flange portion is higher. This further improves the longitudinal rigidity of the well portion 11, and can suppress a strain due to a difference between a torque on the disk portion side in the axial direction and a torque on the inner rim flange side in the same direction.
In addition, the well ribs 85 are formed in a geometric-pattern-like shape.

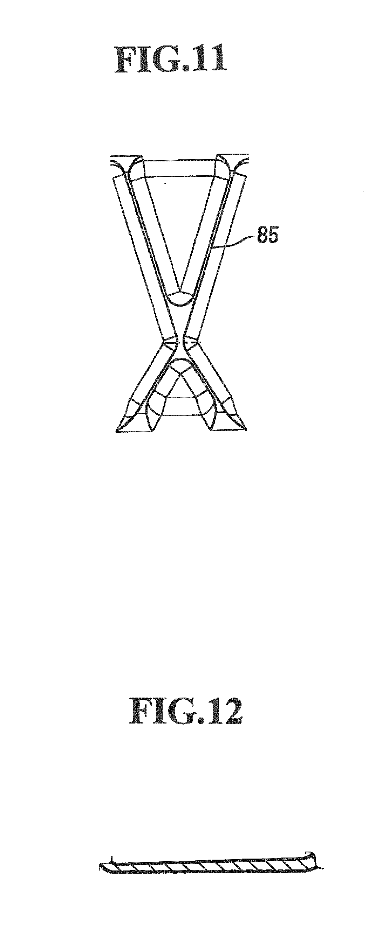

FIG. 11 is a plan view showing the well rib provided on the well portion in the light alloy wheel according to the seventh embodiment.
As shown in FIG. 11, a constituent unit of the well rib 85 has an off-centered X-shaped structure as viewed from the above, and an inverted V-shaped structure in cross section.
As shown in FIG. 10B, since the well rib 85 is so disposed as to have its center near the side of the inner rim flange, the side of the inner rim flange portion is further reinforced, and deflection is more reliably suppressed.

Hereinabove, the preferred embodiments of the present invention have been described, but the present invention is not limited to the above embodiments.

For example, as a material of the light alloy wheels according to the first to seventh embodiments, an aluminum light alloy is used, but a magnesium light alloy or the like may be used.

In the light alloy wheel 30 according to the third embodiment, a constituent unit of the well rib 80 has the X shape as viewed from the above, but may have a Y shape as viewed from the above, or may have a V shape as viewed from the above, or may have a zigzag shape.

In the light alloy wheel 40 according to the fourth embodiment, the shape of the flange rib 82 is not particularly limited. In addition, the light alloy wheel may have the well ribs and the flange ribs at the same time.

FIG. 12 is an enlarged sectional view of a well portion of a light alloy wheel according to another embodiment.
As shown in FIG. 12, the thickness of the well portion becomes gradually thicker from the side of the disk portion toward the side of the inner rim flange portion. This further reinforces the side of the inner rim flange portion so that deflection can be more reliably suppressed.

### Examples

### (Example 1)

As Example 1, the light alloy wheel 10 according to the first embodiment shown in FIG. 2 was used.

### (Example 2)

As Example 2, the light alloy wheel 20 according to the second embodiment shown in FIG. 3 was used.

### (Example 3)

As Example 3, the light alloy wheel 30 according to the third embodiment shown in FIG. 4 was used.

### (Example 4)

As Example 4, the light alloy wheel 40 according to the fourth embodiment shown in FIG. 6 was used.

### (Example 5)

As Example 5, the light alloy wheel 60 according to the sixth embodiment shown in FIG. 8 was used.

### (Comparative Example 1)

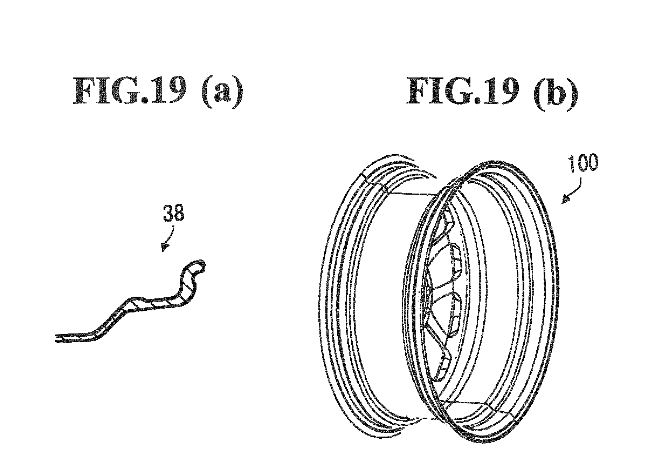

As Comparative Example 1, an ordinary light alloy wheel 100 having an inner rim portion 38 shown in FIG. 19 shown in FIG. 2, which does not include the inner circumferential flange 13b, was used.

### (Evaluation Method 1)

Longitudinal rigidity tests were performed on the light alloy wheels in Examples 1 to 5 and Comparative Example 1.

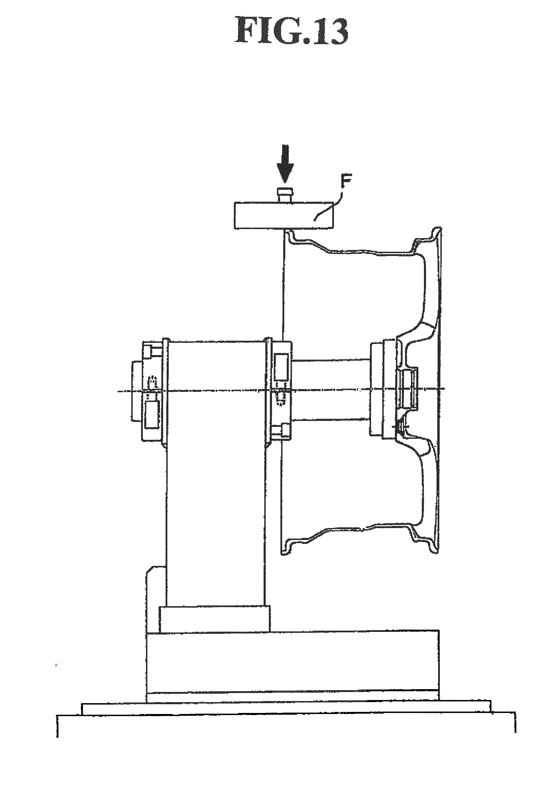

FIG. 13 is a schematic view showing the outline of the longitudinal rigidity test on Examples.
As shown in FIG. 13, the disk portion of the wheel was attached to a test stand, and a disk-like weight F was then placed on the distal end of the inner rim portion positioned horizontally and was so pressed as to apply a 5.0 kN load vertically (longitudinally) from the center of the weight F to the surface of the inner rim portion. Thereafter, the wheel was relieved from the load, and a displacement (mm) of the inner rim portion from its original position was measured.
The result of the rim longitudinal rigidity tests obtained is shown in Table 1. In Table 1, the "rim thickness" means the thickness of the well portion of each light alloy wheel, and the "rigidity ratio" means the ratio of the displacement (an average displacement of displacements in the X axis, the y axis, and the z axis) of the light alloy wheel in each Example to a displacement (an average displacement of displacements in the X axis, the y axis, and the z axis) of the light alloy wheel in Comparative Example 1, when the displacement of the latter is represented by 100.

**(Table 1)**

| | Rim Thickness (mm) | Displacement (mm) | Rigidity Ratio (%) |
|---|---|---|---|
| Example 1 | 1. 9 | 2.15 | 133.0 |
| Example 2 | 1. 8 | 2.07 | 138.2 |
| Example 3 | 1.5 | 2.09 | 136.8 |
| Example 4 | 1.9 | 2.07 | 138.2 |
| Example 5 | 1.5 | 2.09 | 136.8 |
| Comparative Example 1 | 2. 8 | 2.86 | 100.0 |

### (Evaluation Method 2)

Lateral rigidity tests were performed on the light alloy wheels in Examples 1 to 5 and Comparative Example 1.

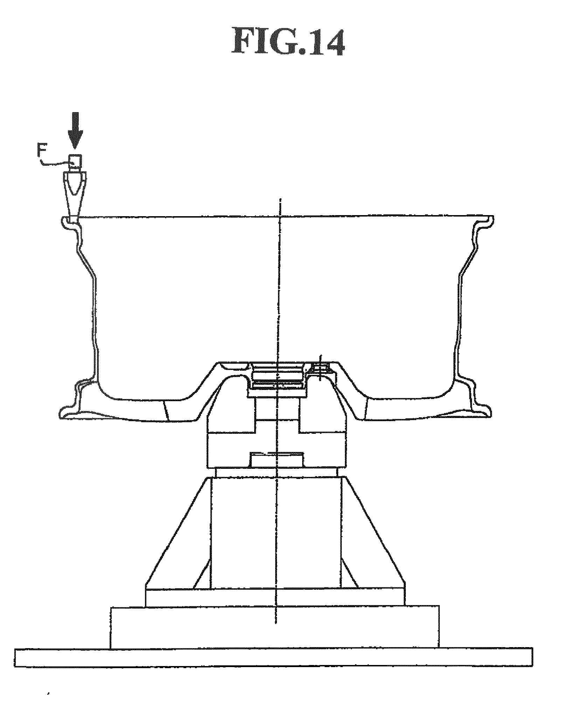

FIG. 14 is a schematic view showing the outline of the lateral rigidity test on Examples.
As shown in FIG. 14, the disk portion of the wheel was attached to a test stand, and a disk-like weight F was placed on the distal end of the inner rim portion erected vertically and the wheel was then pressed through the weight F in such a manner that a 5.0 kN load was applied in an extending direction (longitudinal direction) of the inner rim portion. Thereafter, the wheel was relieved from the load, and the displacement (mm) of the inner rim portion was measured.
The result of the rim lateral rigidity tests obtained is shown in Table 2. In Table 2, the "rim thickness" means the thickness of the well portion of each light alloy wheel, and the "rigidity ratio" means the ratio of the displacement (an average displacement in the X axis, the y axis, and the z axis) of the light alloy wheel in each Example to a displacement (an average displacement in the X axis, the y axis, and the z axis) of the light alloy wheel in Comparative Example 1, when the displacement of the latter is represented by 100.

**(Table 2)**

| | Rim Thickness (mm) | Displacement (mm) | Rigidity Ratio (%) |
|---|---|---|---|
| Example 1 | 1.9 | 1. 32 | 109.8 |
| Example 2 | 1. 8 | 1. 31 | 110.7 |
| Example 3 | 1. 5 | 1. 37 | 105.8 |
| Example 4 | 1.9 | 1. 32 | 109.8 |
| Example 5 | 1. 5 | 1. 32 | 109.8 |
| Comparative Example 1 | 2. 8 | 1. 45 | 100.0 |

### (Evaluation Method 3)

Tyre bead deflection tests were performed on the light alloy wheels in Examples 1 to 5 and Comparative Example 1.

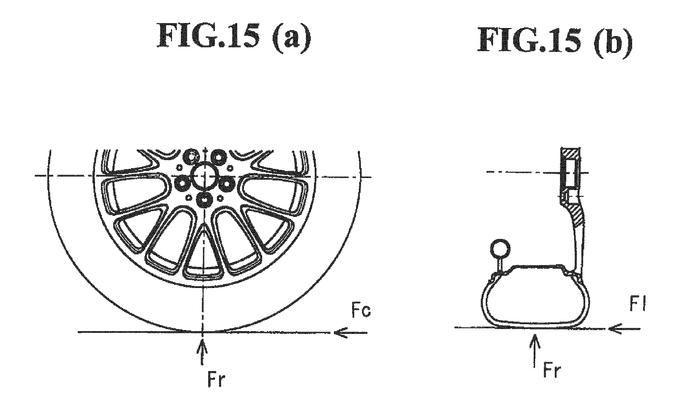

FIG. 15A is a side view showing the outline of the tyre bead deflection test on the Examples, and FIG. 15B is a sectional view thereof.
As shown in FIGS. 15A and 15B, a tyre was attached to the wheel, and loads were triaxially applied the tyre in such a manner that a 5.7 kN load was applied in a longitudinal direction Fr, a 7.0 kN load in a lateral direction Fl, and a 2.9 kN load in a lateral direction Fc. Then, the deflection at that time was measured.
The result of the tyre bead deflection tests obtained is shown in Table 3. In Table 3, the "rim thickness" means the thickness of the well portion of each light alloy wheel, and the "rigidity ratio" means the ratio of the displacement (an average displacement in the X axis, the y axis, and the z axis) of the light alloy wheel in Example to a displacement (an average displacement in the X axis, the y axis, and the z axis) of the light alloy wheel in the comparative example 1, when the displacement of the latter is represented by 100.

**(Table 3)**

| | Rim Thickness (mm) | Displacement (mm) | Rigidity Ratio (%) |
|---|---|---|---|
| Example 1 | 1. 9 | 1.81 | 120. 4 |
| Example 2 | 1. 8 | 1. 74 | 125.3 |
| Example 3 | 1. 5 | 1. 75 | 124.6 |
| Example 4 | 1. 9 | 1.80 | 121.1 |
| Example 5 | 1. 5 | 1. 75 | 124.6 |
| Comparative Example 1 | 2. 8 | 2. 18 | 100.0 |

From the results in Tables 1 and 2, the rigidity ratios of the light alloy wheel in Example 2 were the highest values: 138% in longitudinal rigidity, and 110.7% in lateral rigidity.
From Table 3, the rigidity ratio of the light alloy wheel in Example 2 was 125.3%, which was particularly excellent.
It should be noted that the rim thickness of the light alloy wheel in Example 2 was 64% of the rim thickness of the light alloy wheel in Comparative Example 1.

### (Evaluation Method 4)

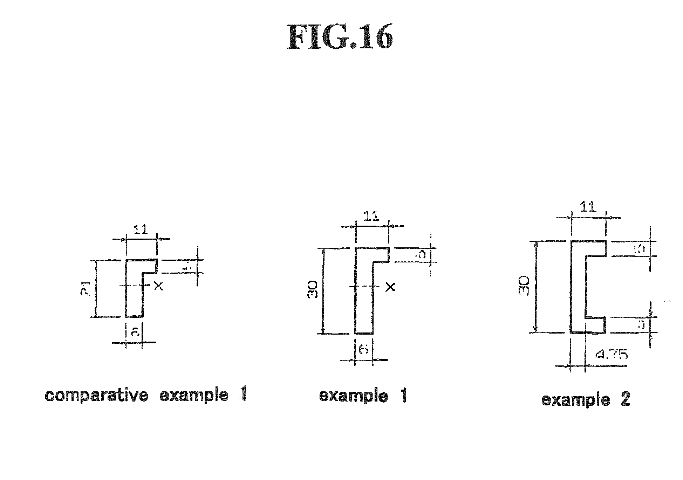

The dimensions (mm) of the inner rim flange portion of the light alloy wheels in Examples 1, 2, and Comparative Example 1 were set as shown in FIG. 16, and the second moment of area about the X axis with force applied to the wheel ignored was calculated.
The result of the second moment of area is shown in Table 4.

**(Table 4)**

| | Area (mm²) | Second Moment of Area (mm⁴) | Ratio of Second Moment of Area (%) |
|---|---|---|---|
| Example 1 | 205 | 16982 | 282. 2 |
| Example 2 | 205 | 20583 | 342. 0 |
| Comparative Example 1 | 151 | 6018 | 100.0 |

In the ratio of the second moment of area in Table 4, when the ratio of the second moment of area of the light alloy wheel in Comparative Example 1 was represented by 100%, the ratio of the second moment of area of the light alloy wheel in the example 1 with the inner circumferential flange portion reached 342%.
In addition, the second moment of area of the light alloy wheel in Example 2 that was provided with the inner circumferential flange bending portion was 20583 ÷ 16982 = 1.2 times the second moment of area of the light alloy wheel in Example 1, even though their cross-sectional areas were identical with each other, and therefore the superiority of the cross-sectional shape of the light alloy wheel in Example 2 was confirmed.

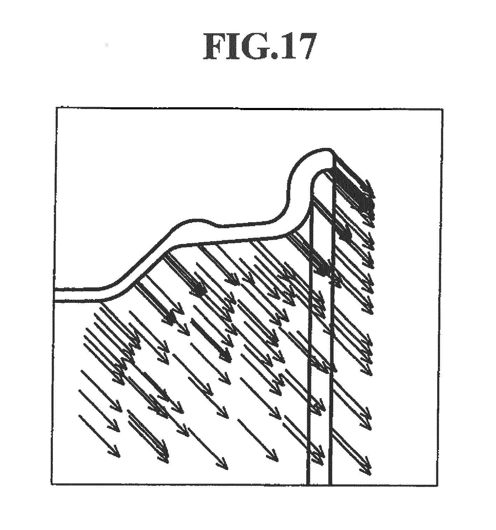

Here, an example of a simulation of stress acting on the inner rim portion of the light alloy wheel when a tyre is attached to the wheel and a predetermined air pressure is given is shown in FIG. 17.
As shown in FIG. 17, it can be understood that force opening the inner rim flange portion outward is applied at an angle of about 45° with respect to the axis of rotation of the wheel.

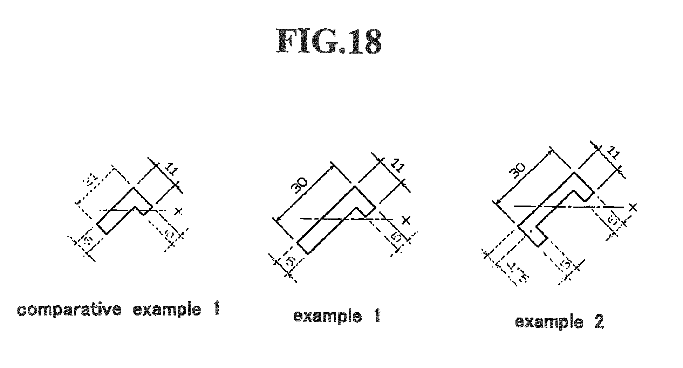

In consideration of such a load, namely, force acting on the wheel, the dimensions (mm) of the inner rim flange portion of the light alloy wheels in Examples 1, 2, and Comparative example 1 were set as shown in FIG. 18, and the second moment of area about the X axis was calculated.
The result of the second moment of area is shown in Table 5.

**(Table 5)**

| | Area (mm²) | Second Moment of Area (mm⁴) | Ratio of Second Moment of Area (%) |
|---|---|---|---|
| Example 1 | 205 | 7610 | 290.3 |
| Example 2 | 205 | 11185 | 426.6 |
| Comparative Example 1 | 151 | 2622 | 100.0 |

In the ratio of the second moment of area in Table 5, when the ratio of the second moment of area of the light alloy wheel in Comparative Example 1 was represented by 100%, the ratio of the second moment of area of the light alloy wheel in Example 2 with the inner circumferential flange portion and the inner circumferential flange bending portion reached 426.6%.

### Industrial Applicability

The light alloy wheel of the present invention, which is light in weight and has excellent longitudinal and lateral rigidities, is used suitably as a vehicle wheel.

### Reference Signs List

6... Disk portion
8, 18, 28, 38... Inner rim portion
10, 20, 30, 40, 50, 60, 70, 100... Light alloy wheel
11, 21, 31... Well portion
12, 22, 32... Rim middle portion
12a... Connection portion
12b... Hump portion
12c... Bead seat portion
13, 23, 33... Inner rim flange portion
13a, 23a, 33a... Outer circumferential flange
131a, 231a... Outer circumferential flange bending portion
13b, 23b, 33b.., Inner circumferential flange
15, 25, 55... Junction portion
231b... Inner circumferential flange bending portion
34... Outer rim portion
80, 83, 5... Well rib
82... Flange rib
F... Weight

## Claims

1. A light alloy wheel 10 for a vehicle provided with a disk portion 6 and an inner rim portion 8 erected along a circumferential edge of the disk portion 6, wherein
the inner rim portion 8 comprises a well portion 11 erected vertically along the circumferential edge of the disk portion 6, a rim middle portion 12 continuous with the well portion 11, and an inner rim flange portion 13 connected to a junction portion 15 at a distal end of the rim middle portion 12,
the inner rim flange portion 13 comprises an outer circumferential flange 13a extending outward from the junction portion 15, and an inner circumferential flange 13b extending inward from the junction portion, and
a circumferential edge of the outer circumferential flange 13a is bent in an axial direction of the light alloy wheel 10.

2. The light alloy wheel 10 according to claim 1, wherein
the average thickness of the inner circumferential flange 13b is thicker than the average thickness of the outer circumferential flange 13b, and
the radial length of the inner circumferential flange 13b is shorter than the radial length of the outer circumferential flange 13a.

3. The light alloy wheel 10 according to claim 1 or 2, wherein the inner circumferential flange 13b is so provided as to be perpendicular to an axis of the light alloy wheel 10.

4. The light alloy wheel 1 according to claim 3, further comprising an inner circumferential flange bending portion 231b formed by further bending a circumferential edge of the inner circumferential flange 13b in the axial direction.

5. The light alloy wheel 10 according to claim 4, wherein a flange rib 82 is so provided as to extend between an outer circumferential flange bending portion 131a formed by bending a circumferential edge of the outer circumferential flange 13a in the axial direction and the inner circumferential flange bending portion 231b formed by further bending a circumferential edge of the inner circumferential flange 13b in the axial direction.

6. The light alloy wheel 10 according to any one of claims 1 to 5, wherein the thickness of the well portion 10 is 2.0 mm or less.

7. The light alloy wheel 10 according to any one of claims 1 to 6, wherein the rim middle portion 12 comprises an inclined connection portion 12a, a protrusion-like hump portion 12b provided on the connection portion 12a, and a bead seat portion 12c continuous with the hump portion 12b.

8. The light alloy wheel 10 according to any one of claims 1 to 6, wherein the well portion 11 is provided with a geometric-pattern-like well rib 80.

9. The light alloy wheel 10 according to claim 8, wherein the side of the disk portion 6 and the side of the inner rim flange portion 13 are different in imparted density of the well rib 80 from each other.

10. The light alloy wheel 10 according to claim 8, wherein the side of the disk portion 6 and the side of the inner rim flange portion 13 are different in height of the well rib 80 from each other.

11. The light alloy wheel 10 according to any one of claims 1 to 10, wherein the side of the disk portion 6 and the side of the inner rim flange portion 13 are different in thicknesses of the well portion 11 from each other.
